# EUROPEAN PATENT APPLICATION

(11) **EP 1 514 880 A1**
(43) Date of publication of application: **16.03.2005**
(21) Application number: 04021744.0
(22) Date of filing: 13.09.2004
(51) Int. Cl.: C08F 8/42, C03C 21/00, C08J 7/04

(54) **Method for coating solid substrate surface with fine particles**

(30) Priority: 11.09.2003 JP 2003319926
(71) Applicant: Shinwa Chemical Industries, Ltd., Kyoto-Shi, Kyoto-fu 612-8307 (JP)
(72) Inventor: Wada, Hiroo, Kyoto-Shi Kyoto-Fu 612-8307 (JP)
(74) Representative: VOSSIUS & PARTNER

(57) **Abstract**

A method for coating the surface of a solid material with fine particles of a metal or a metal compound is provided. The method comprises the step of bringing a solid material into close contact with fine particles of a metal or a metal compound to which a compound having at least two mercapto groups is bonded, under light-shielding conditions or under the irradiation with light rays other than laser light rays. The method does not require the use of any specially designed device. It permits the immobilization of fine particles on the surface of a solid within an appropriate period of time, the immobilization thereof even in the environment in which light cannot be used, the production of a desired fine particle-coated solid material at a low cost and the uniform coating of even a solid material having a wide area with fine particles. Accordingly, the method can be applied to the immobilization of metal fine particles on various solid substrates, for instance, the surface-modification of a support for chromatography, a sensor, an inner wall of glass capillaries, a microchip device, a microarray or a DNA chip.

## Description

The present invention relates to a method for coating the surface of a solid material with fine particles of a metal or a metal compound and the use of the coated surface as a separation field for chromatography, a support for chromatography, a sensor, an inner wall of a glass capillary tube, a microchip device, a microarray or a DNA chip.

As a means for immobilizing metallic fine particles on a solid substrate, there have been proposed a variety of methods. For instance, there has been proposed a method for coating the inner wall of an optical fiber with gold ultrafine particles (nano-particles) (see non-patent document 1 specified below). This method comprises the steps of forming linkages between the silane groups of 3-mercaptopropyl trimethoxy silane and hydroxyl groups present on the surface of an optical fiber and then immobilizing gold nano-particles on the surface thereof while making use of the resulting thiol groups. In addition, there has also been reported a method for immobilizing gold nano-particles on a solid substrate using an alternating adsorption method (see non-patent document 2 specified below). In this method, in order to apply the alternating adsorption method, gold nano-particles are modified with an alkyl thiol, then a charge-carrying thiol compound or an alkyl thiol compound carrying amino groups or carboxyl groups is chemically adsorbed on the gold nano-particles while making use of the "place-exchange" reaction and the resulting gold nano-particles are used together with a charge-carrying polymeric compound such as a polyallyl-amine hydrochloride or a poly(sodium 4-styrene sulfonate) to form an alternating adsorption film.

As another means for immobilizing gold fine particles on a solid substrate, there has been reported a method comprising the steps of dispersing, in a solution, gold nano-particles on which an alkyl thiol compound is adsorbed and then irradiating the gold nano-particles with laser light rays having a wavelength falling within the range of from ultraviolet to near infrared rays to thus bind the gold nano-particles to the surface of a solid substrate (see patent reference 1 listed below).

The foregoing method comprising the steps of forming linkages between the silane groups of 3-mercaptopropyl trimethoxy silane and hydroxyl groups present on the surface of an optical fiber and then immobilizing gold nano-particles on the surface thereof while making use of the resulting thiol groups may suffer from various problems such that the 3-mercaptopropyl trimethoxy silane used is quite expensive, that it is difficult to handle such a silane compound because of its relatively high reactivity, that it is difficult to uniformly coat the interior of a long fine tube or a substrate having a wide surface area and that the use of the foregoing step further makes the production cost high.

The foregoing immobilization of gold nano-particles on the surface of a substrate using the alternating adsorption method requires the use of an expensive charge-carrying polymeric compound such as a polyallyl-amine hydrochloride or a poly(sodium 4-styrene sulfonate) as well as an expensive thiol compound such as mercapto-undecanoic acid or 4-aminothiol phenol. Moreover, it takes several days for the completion of the "place-exchange" reaction and therefore, this method requires a long period of time for the production of a desired surface-coated solid material and the production efficiency thereof is thus quite low. Further, the alternating adsorption method requires the use of several layers of precursors for the stabilization of a coated film, this increases the amount of the reagents to be used and it takes a long period of time for the production of such a desired surface-coated solid. Accordingly, the final product becomes more expensive from this standpoint.

In addition, the method requires the use of a polymeric compound in addition to gold and a thiol compound. For instance, when applying a carrier on which gold nano-particles are immobilized to a chromatography technique, unnecessary adsorption may possibly take place at sites on which nano-particles are immobilized.

In addition, the alternating adsorption method requires the strict control of the pH value of a solution in which such a polymeric compound is dissolved, the time required for immersing gold nano-particles in such a solution and the concentration of the polymeric compound in the solution to thus control the film thickness. In other words, the production of a desired surface-coated solid material would require the control of various factors to a high level.

On the other hand, in the foregoing method comprising the steps of dispersing, in a solution, gold nano-particles on which an alkyl thiol compound is adsorbed and then irradiating the gold nano-particles with laser light rays having a wavelength falling within the range of from ultraviolet to near infrared rays to thus bind the gold nano-particles to the surface of a solid substrate, laser light rays should be used for the immobilization of gold nano-particles and therefore, the method requires the use of an expensive and specially designed device for the generation of such laser light rays. Moreover, the requirement for the use of light rays makes it difficult to immobilize such nano-particles on a subject or environment in which light cannot be used, for instance, in the interior of a porous silica carrier or on the inner walls of glass-coated stainless steel fine tubes. Moreover, when using highly convergent or coherent laser light rays, it is possible to uniformly coat a narrow region identical to the area of a spot capable of being irradiated with a laser beam, but it is difficult to uniformly coat a region wider than the foregoing.
Non-patent document 1: S. Cheng et al., Analytical Chemistry, 2003, 75: 16-21;
Non-patent document 2: J.F. Hicks et al., Langmuir, 2002, 118: 2288-2294;
Patent document 1: Japanese Un-Examined Patent Publication 2001-149774.

It is in general an object of the present invention to solve the foregoing problems associated with the conventional techniques. More specifically, it is an object of the present invention to provide a method for uniformly coating the surface of a solid subject which does not require the use of any specially designed device and which permits the immobilization of fine particles on the surface of a solid within an appropriate period of time, the use of cheap reagents, the easy control of the reactions concerned, the immobilization thereof even in the environment in which light cannot be used, the production of a desired fine particle-coated solid material at a low cost and the uniform coating of even a solid material having a wide area with fine particles.

The conditions for the synthesis of fine particles carrying a sulfur compound linked thereto have been investigated and it has been found that if specific requirements are satisfied, fine particles of a metal or a metal compound can easily be immobilized on the surface of a solid material. The present invention thus herein provides the following method for coating the surface of a solid as well as the use of the coated surface as a separation field for the chromatography technique, a sensor, an inner wall of a glass capillary tube, a microchip device, a microarray or a DNA chip.
1. A method for coating the surface of a solid material with fine particles of a metal or a metal compound, which comprises the step of bringing a solid material into close contact with fine particles of a metal or a metal compound to which a compound having at least two mercapto groups is bonded, under light-shielding conditions or under the irradiation with light rays other than laser light rays.
2. The method as set forth in the foregoing item 1, wherein the metal or metal compound is at least one member selected from the group consisting of gold, silver, copper, iron, lead, mercury, silver oxide, iron oxide, and aluminum oxide.
3. The method as set forth in the foregoing item 1, wherein the metal or metal compound is a reaction product of tetrachloro-aurate (III) hydrate with tetra-n-octyl ammonium bromide.
4. The method as set forth in any one of the foregoing items 1 to 3, wherein the compound having at least two mercapto groups is a dithiol compound.
5. The method as set forth in the foregoing item 4, wherein the dithiol compound is an alkyl dithiol compound.
6. A substitution method comprising the step of bringing the surface of a solid material coated with fine particles of a metal or a metal compound according to the method as set forth in any one of the foregoing items 1 to 5 into contact with another thiol compound.
7. The use of the solid material coated with fine particles of a metal or a metal compound obtainable according to the method as set forth in any one of the foregoing items 1 to 6 as a separation field for chromatography.
8. The use as set forth in the foregoing item 7, wherein the solid material comprises glass, silicon oxide, quartz, a polymeric material, a metal or an alloy.
9. The use as set forth in the foregoing item 7 or 8 wherein the solid material is in a plate-like, pulverized particle-like, tubular or spherical shape.
10. The use as set forth in any one of the foregoing items 7 to 9, wherein the solid material is a support for chromatography, a sensor, an inner wall of a glass capillary tube, a microchip device, a microarray or a DNAchip.

The present invention does not require the use of any specially designed device and the present invention permits the immobilization of fine particles on the surface of a solid within an appropriate period of time, the use of cheap reagents, the easy control of the reactions concerned, the immobilization thereof even in the environment in which light cannot be used, the production of a desired fine particle-coated solid material at a low cost and the uniform coating of even a solid material having a wide area with fine particles. This coating method can be applied to the surface-modification of, for instance, a support for chromatography, a sensor, an inner wall of a glass capillary tube, a microchip device, a microarray or a DNA chip.
Fig. 1 is a Ultraviolet/visible (UV/VIS) spectrograph of a gold nano-particle-coated cover glass.
Fig. 2 is a UV/VIS spectrograph of a gold nano-particle-coated cover glass and shows the coated amounts of gold nano-particles observed when the concentration of N(C₈H₁₇)₄Br is changed.
Fig. 3 is a UV/VIS spectrograph of a gold nano-particle-coated cover glass and shows the coated amounts of gold nano-particles observed when the concentration of HS(CH₂)₁₀SH is changed.
Fig. 4 is a UV/VIS spectrograph of a gold nano-particle-coated cover glass and shows the coated amounts of gold nano-particles observed when the concentration of NaBH₄ is changed.

The metal or metal compound used in the present invention is not restricted to a specific one inasmuch as it can be linked with a compound carrying at least two mercapto groups, but specific examples thereof preferably used herein are gold, silver, copper, iron, lead, mercury, silver oxide, iron oxide and aluminum oxide. Alternatively, the metal or metal compound may be synthesized in the reaction system and therefore, the reaction product of tetrachloro-aurate (III) hydrate with tetra-n-octyl ammonium bromide may, for instance, be subjected to a reaction with a compound carrying at least two mercapto groups, without isolation of the product or any pre-treatment thereof.

The diameter of the metal or metal compound fine particles used in the invention is not restricted to any specific range, but it preferably ranges from 0.1 nm to 1 µm, more preferably 0.2 nm to 50 nm and most preferably 1 nm to 20 nm.

The compound carrying at least two mercapto groups used in the invention is not restricted to a specific one insofar as it has at least two mercapto groups capable of being linked to a metal or metal compound, but examples thereof preferably used herein are dithiol compounds such as alkyl dithiol compounds and aryl dithiol compounds, in particular, alkyl dithiol compounds. The number of carbon atoms present in the alkyl group preferably ranges from 1 to 40 and more preferably 2 to 12- The number of carbon atoms present in the aryl group preferably ranges from 6 to 40 and more preferably 6 to 12.

Specific examples of the compound carrying at least two mercapto groups include 1,10-decanedithiol, 1,6-hexanedithiol, 1,4-butanedithiol, 1,8-octanedithiol, 1,9-nonane-dithiol, 1,2-benzenedithiol, 1,3-benzenedithiol and 1,4-benzenedithiol.

The metal or metal compound fine particles can be reacted with a compound carrying at least two mercapto groups in an amount preferably ranging from 0.0001 to 1000 parts by weight, more preferably 0.001 to 1 p art by weight and most preferably 0.01 to 0.05 parts by weight per 100 parts by weight of the fine particles in an appropriate solvent (such as a 1:1 mixture of toluene and water) at a temperature preferably ranging from 0 to 100°C, more preferably 10 to 50°C and most preferably 20 to 40°C for a time preferably ranging from 0.1 second to 30 days, more preferably 1 to 100 hours and most preferably 20 to 50 hours.

The concentration of the metal or metal compound fine particles present in the reaction solution preferably ranges from 0.00001 to 0.1% by weight, more preferably 0.0001 to 0.05% by weight and most preferably 0.0005 to 0.01% by weight, while that of the compound carrying at least two mercapto groups preferably ranges from 0.0000001 to 1% by weight, more preferably 0.000001 to 0.0001% by weight, most preferably 0.00001 to 0.00005% by weight.

The fine particles thus linked with the compound carrying at least two mercapto groups are brought into close contact with a solid material under light-shielding conditions or under the irradiation with light rays other than laser light rays.

The term "solid material" used herein means substances other than those in the gaseous, liquid and supercritical states and it is not restricted to any specific one, but specific examples thereof are glass, silicon oxide, quartz, polymeric materials, metals and alloys.

The shape of the solid material is not restricted to any particular one and those usable herein include, for instance, those having a variety of shapes such as plate-like, pulverized particle-like, tubular and spherical shapes. In addition, the solid material may be porous or non-porous.

Examples of specific shapes of the solid materials are carriers for chromatography, sensors, inner walls of glass capillaries, microchip devices, microarrays and DNA chips.

The fine particles thus linked with the compound carrying at least two mercapto groups may be brought into close contact with such a solid material in an amount preferably ranging from 0.01 µg to 300 mg, more preferably 0.1 µg to 3 mg and most preferably 3 to 15 µg per unit surface area (1 cm²) of the solid material in an appropriate solvent (such as toluene, benzene or xylene) at a temperature preferably ranging from 0 to 100°C, more preferably 10 to 50°C and most preferably 20 to 40°C for a time preferably ranging from 0.1 second to 10 days, more preferably 1 to 100 hours and most preferably 20 to 50 hours, under light-shielding conditions or under the irradiation with light rays other than laser light rays. The completion of the reaction may be confirmed by, for instance, monitoring the color change of the surface of the solid material (such as the change of the color of the surface to, for instance, a bluish dark color).

The concentration of the metal or metal compound fine particles, which are linked with the compound carrying at least two mercapto groups and present in the reaction solution, preferably ranges from 0.0000001 to 1% by weight, more preferably 0.000001 to 0.0001% by weight and most preferably 0.00001 to 0.00005% by weight.

A more specific example in which a dithiol compound is used as the compound carrying at least two mercapto groups will be detailed below.

Metal or metal compound fine particles which are linked with a dithiol compound are prepared according to the method disclosed in D.V. Left et al., J. Phys. Chem., 1995, 99: 7036-7041. The concentration of the dithiol compound ranges from 0.01 to 10 mM and preferably 0.1 to 0.3 mM, the concentration of tetra-n-octyl ammonium bromide ranges from 1 to 100 mM and preferably 10 to 40 mM and that of sodium borohydride ranges from 1 to 100 mM and preferably 10 mM to 40 mM. In this respect, the concentration means that (mM/L) on the basis of the sum of the volumes of the organic and aqueous phases.

A solid such as glass or quartz is immersed in a dispersion of fine particles of a metal or a metal compound to which the foregoing dithiol compound is linked under light-shielding conditions or under the irradiation with light rays other than laser light rays or under the irradiation with light rays in which at least one of or all of the phase, wavelength and direction thereof are non-uniform to thus coat the solid material with the fine particles of a metal or a metal compound.

In a specific example, HAuCl₄ dissolved in water and tetra-n-octyl ammonium bromide dissolved in toluene are vigorously stirred, an alkyl dithiol dissolved in toluene is added to the resulting mixture and then sodium borohydride is added to the mixture to thus prepare gold nano-particles carrying the dithiol compound linked thereto. The toluene phase is removed from the mixture and a solid substrate to be coated is immersed in the toluene phase to thus coat the solid substrate with the gold nano-particles,

According to the present invention, a solid material can preferably be coated with a metal or a metal compound under light-shielding conditions, but it is also possible to coat a solid material with a metal or a metal compound under the irradiation with light rays other than laser light rays. If the coating operation is carried out under the light-shielding conditions, even sites on a solid material at which any light ray never arrives can certainly be coated with such nano-particles and the resulting film has a thickness more uniform than that achieved by the coating under the irradiation of light rays. If irradiation with light rays other than laser light rays is employed, the wavelengths thereof are preferably in the range of 300 to 800 nm.

Moreover, the solid material may be heated at a temperature preferably ranging from 10 to 2000°C and more preferably 30 to 1200°C for a time preferably ranging from 0.01 second to 10 hours, and more preferably 10 seconds to one hour after the coating thereof with the foregoing nano-particles to thus further enhance the bonding strength between the solid substrate or material and the fine particles of a metal or a metal compound carrying a compound having at least two mercapto groups linked thereto. Furthermore, the substrate coated with a metal or a metal compound is removed from the reaction solution after the completion of such a coating operation and then the substrate is irradiated with, for instance, laser light rays to thus further strengthen the coated film. The wavelengths of the laser light rays employed are preferably in the range of 270 to 1100 nm, more preferably 790 to 830 nm.

The present invention will hereunder be described in more detail with reference to the following working Examples, but the present invention is not restricted to these specific Examples at all.

### EXAMPLES

### Example 1

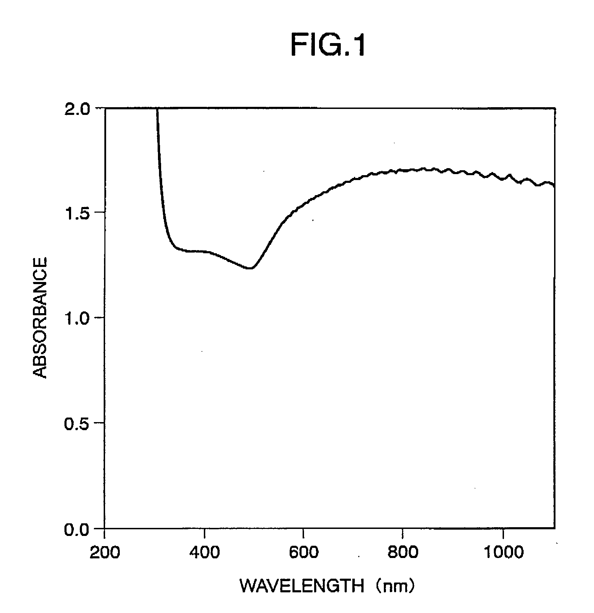

To a sample bottle of glass having a volume of 9 mL, there was added 0.9 mL of an aqueous solution of HAuCl₄, which corresponded to a concentration of 6 mM when the total volume was equal to 5 mL, followed by vigorously stirring the solution, and then adding 3.9 mL of a solution of N(C₈H₁₇)₄Br in toluene, which corresponded to a concentration of 15 mM when the total volume was equal to 5 mL. At this stage, the color of the solution changed from yellow to a reddish color by the addition of N(C₈H₁₇)₄Br. After vigorously stirring the resulting mixture for 10 minutes, 0.1 mL of HS(CH₂)₁₀SH was added to the mixture (this amount corresponded to a concentration of 0.1 mM when the total volume was equal to 5 mL) and then the resulting mixture was vigorously stirred for additional 10 minutes. To the mixture, there was gradually added 0.1 mL of NaBH₄ (this amount corresponded to a concentration of 10 mM when the total volume was equal to 5 mL) and as a result, the color of the solution changed from a reddish one to a bluish dark one. The mixture was vigorously stirred for 30 minutes under these conditions and allowed to stand to thus make the mixture separate into an organic phase and an aqueous phase. Thereafter the organic phase thus separated was introduced into a glass sample bottle having a volume of 9 mL and then a cover glass cut into a piece having a size of 18 mm × 9 mm was immersed in the organic phase. After allowing this system to stand for 20 hours under light-shielding conditions, it was found that the surface of the cover glass and the inner wall of the sample bottle were covered with a bluish dark colored film of gold nano-particles. After washing the cover glass coated with gold nano-particles with methanol, it was subjected to the ultraviolet-visible spectroscopic analysis (UV/VIS Spectrograph). The resulting UV/VIS spectrograph is shown in Fig. 1.

### Comparative Example 1

The same procedures used in Example 1 were repeated except that C₁₈H₃₇SH was substituted for HS(CH₂)₁₀SH. As a result, it was found that C₁₈H₃₇S-modified gold nano-particles were not immobilized on a cover glass at all.

### Example 2

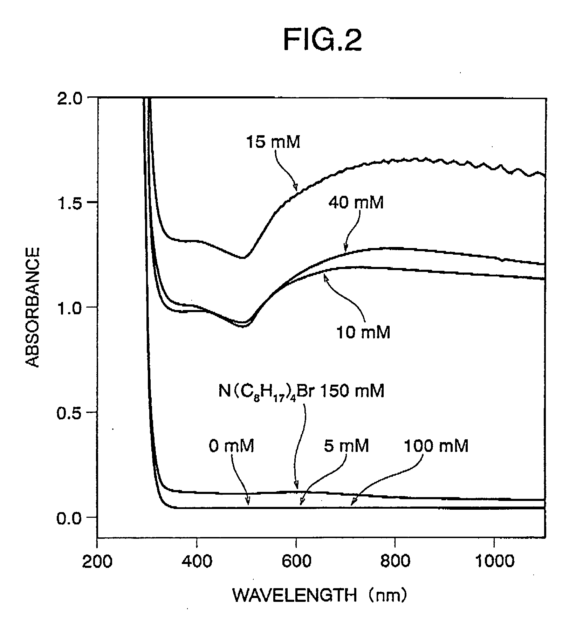

To a sample bottle of glass having a volume of 9 mL, there was added 0.9 mL of an aqueous solution of HAuCl₄, which corresponded to a concentration of 6 mM when the total volume was equal to 5 mL, followed by vigorously stirring the solution, and then adding 3.9 mL of a solution of N(C₈H₁₇)₄Br in toluene, which corresponded to a concentration as specified in Fig. 2 (more specifically 0, 5, 10, 15, 40, 100 or 150 mM) when the total volume was equal to 5 mL. At this stage, the color of the solution changed from yellow to a reddish color by the addition of N(C₈H₁₇)₄Br. After vigorously stirring the resulting mixture for 10 minutes, 0.1 mL of HS(CH₂)₁₀SH was added to the mixture (this amount corresponded to a concentration of 0.1 mM when the total volume was equal to 5 mL) and then the resulting mixture was vigorously stirred for additional 10 minutes. To the mixture, there was gradually added 0.1 mL of NaBH₄ (this amount corresponded to a concentration of 10 mM when the total volume was equal to 5 mL) and as a result; the color of the solution changed from a reddish one to a bluish dark one. The mixture was vigorously stirred for 30 minutes under these conditions and allowed to stand to thus make the mixture separate into an organic phase and an aqueous phase. Thereafter the organic phase thus separated was introduced into a glass sample bottle having a volume of 9 mL and then a cover glass cut into a piece having a size of 18 mm × 9 mm was immersed in the organic phase. After allowing this system to stand for 20 hours under light-shielding conditions, it was found that the surface of the cover glass and the inner wall of the sample bottle were covered with a bluish dark colored film of gold nano-particles. After washing the cover glass coated with gold nano-particles with methanol, it was subjected to the ultraviolet-visible spectroscopic analysis (UV/VIS Spectrograph). The resulting LTV/VIS spectrograph is shown in Fig. 2. The highest absorbance was observed when using the N(C₈H₁₇)₄Br solution having a concentration of 15 mM. This clearly indicates that the coated amount of gold nano-particles is highest in this case.

### Example 3

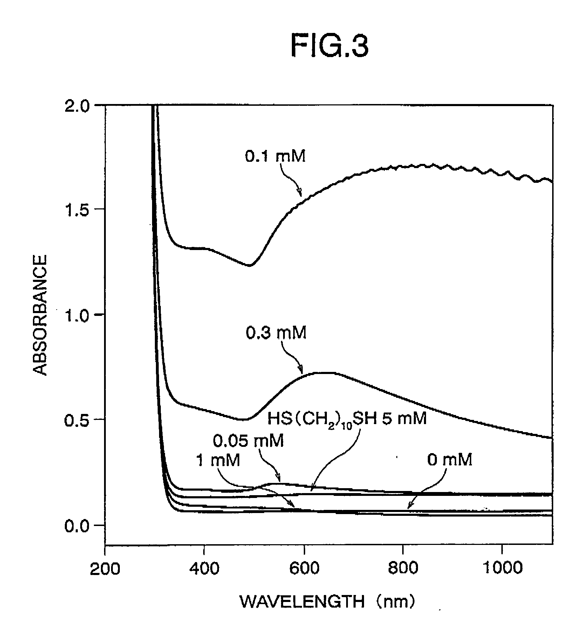

To a sample bottle of glass having a volume of 9 mL, there was added 0.9 mL of an aqueous solution of HAuCl₄, which corresponded to a concentration of 6 mM when the total volume was equal to 5 mL, followed by vigorously stirring the solution, and then adding 3.9 mL of a solution of N(C₈H₁₇)₄Br in toluene, which corresponded to a concentration of 15 mM when the total volume was equal to 5 mL. At this stage, the color of the solution changed from yellow to a reddish color by the addition of N(C₈H₁₇)₄Br. After vigorously stirring the resulting mixture for 10 minutes, 0.1 mL of HS(CH₂)₁₀SH was added to the mixture (this amount corresponded to a concentration as specified in Fig. 3 and more specifically 0, 0.05, 0.1, 0.3, 1 or 5 mM when the total volume was equal to 5 mL) and then the resulting mixture was vigorously stirred for additional 10 minutes. To the mixture, there was gradually added 0.1 mL of NaBH₄ (this amount corresponded to a concentration of 10 mM when the total volume was equal to 5 mL) and as a result, the color of the solution changed from a reddish one to a bluish dark one. The mixture was vigorously stirred for 30 minutes under these conditions and allowed to stand to thus make the mixture separate into an organic phase and an aqueous phase. Thereafter the organic phase thus separated was introduced into a glass sample bottle having a volume of 9 mL and then a cover glass cut into a piece having a size of 18 mm × 9 mm was immersed in the organic phase. After allowing this system to stand for 20 hours under light-shielding conditions, it was found that the surface of the cover glass and the inner wall of the sample bottle were covered with a bluish dark colored film of gold nano-particles. After washing the cover glass coated with gold nano-particles with methanol, it was subjected to the ultraviolet-visible spectroscopic analysis (UTV/VIS Spectrograph). The resulting UV/VIS spectrograph is shown in Fig. 3. The highest absorbance was observed when using the 0.1 mM solution of HS(CH₂)₁₀SH. This clearly indicates that the coated amount of gold nano-particles is highest in this case.

### Example 4

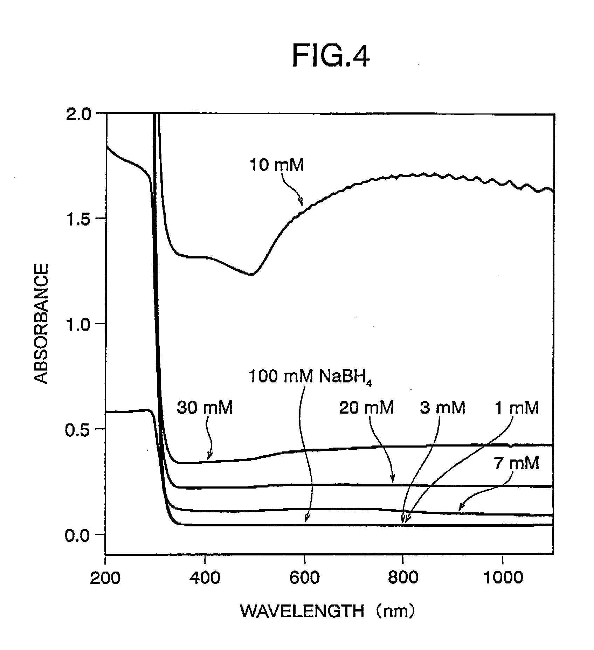

To a sample bottle of glass having a volume of 9 mL, there was added 0.9 mL of an aqueous solution of HAuCl₄, which corresponded to a concentration of 6 mM when the total volume was equal to 5 mL, followed by vigorously stirring the solution, and then adding 3.9 mL of a solution of N(C₈H₁₇)₄Br in toluene, which corresponded to a concentration of 15 mM when the total volume was equal to 5 mL. At this stage, the color of the solution changed from yellow to a reddish color by the addition of N(C₈H₁₇)₄Br. After vigorously stirring the resulting mixture for 10 minutes, 0.1 mL of HS(CH₂)₁₀SH was added to the mixture (this amount corresponded to a concentration of 0.1 mM when the total volume was equal to 5 mL) and then the resulting mixture was vigorously stirred for additional 10 minutes. To the mixture, there was gradually added 0.1 mL of NaBH₄ (this amount corresponded to a concentration as specified in Fig. 4 and more specifically 1, 3, 7, 10, 20, 30 or 100 mM when the total volume was equal to 5 mL) and as a result, the color of the solution changed from a reddish one to a bluish dark one. The mixture was vigorously stirred for 30 minutes under these conditions and allowed to stand to thus make the mixture separate into an organic phase and an aqueous phase. Thereafter the organic phase thus separated was introduced into a sample bottle of glass having a volume of 9 mL and then a cover glass cut into a piece having a size of 18 mm × 9 mm was immersed in the organic phase. After allowing this system to stand for 20 hours under light-shielding conditions, it was found that the surface of the cover glass and the inner wall of the sample bottle were covered with a bluish dark colored film of gold nano-particles. After washing the cover glass coated with gold nano-particles with methanol, it was subjected to the ultraviolet-visible spectroscopic analysis (UV/VIS Spectrograph). The resulting UV/VIS spectrograph is shown in Fig. 4. The highest absorbance was observed when using the 10 mM solution of NaBH₄. This clearly indicates that the coated amount of gold nano-particles is highest in this case.

The coating method of the present invention does not require the use of any specially designed device and the coating method likewise permits the immobilization of fine particles on the surface of a solid within an appropriate period of time, the use of cheap reagents, the easy control of the reactions concerned, the immobilization thereof even in the environment in which light cannot be used, the production of a desired fine particle-coated solid material at a low cost and the uniform coating of even a solid material having a wide area with fine particles and accordingly, the coating method of the invention can be applied to the immobilization of metal fine particles on various solid substrates, for instance, the surface-modification of, for instance, a support for chromatography, a sensor, an inner wall of glass capillaries, a microchip device, a microarray or a DNA chip.

## Claims

1. A method for coating the surface of a solid material with fine particles of a metal or a metal compound, which comprises the step of bringing a solid material into close contact with fine particles of a metal or a metal compound to which a compound having at least two mercapto groups is bonded, under light-shielding conditions or under the irradiation with light rays other than laser light rays.

2. The method of claim 1, wherein the metal or metal compound is at least one member selected from the group consisting of gold, silver, copper, iron, lead, mercury, silver oxide, iron oxide, and aluminum oxide.

3. The method of claim 1, wherein the metal or metal compound is a reaction product of tetrachloro-aurate (III) hydrate with tetra-n-octyl ammonium bromide.

4. The method as set forth in any one of claims 1 to 3, wherein the compound having at least two mercapto groups is a dithiol compound.

5. The method of claim 4, wherein the dithiol compound is an alkyl dithiol compound.

6. A substitution method comprising the step of bringing the surface of a solid material coated with fine particles of a metal or a metal compound according to the method as set forth in any one of claims 1 to 5 into contact with another thiol compound.

7. Use of the solid material coated with fine particles of a metal or a metal compound obtainable according to the method as set forth in any one of claims 1 to 6 as a separation field for chromatography.

8. The use of claim 7, wherein the solid material comprises glass, silicon oxide, quartz, a polymeric material, a metal or an alloy.

9. The use of claim 7 or 8 wherein the solid material is in a plate-like, pulverized particle-like, tubular or spherical shape.

10. The use as set forth in any one of claims 7 to 9, wherein the solid material is a support for chromatography, a sensor, the inner wall of a glass capillary tube, a microchip device, a microarray or a DNA chip.
